# EUROPEAN PATENT SPECIFICATION

(11) **EP 3 483 536 B1**
(45) Date of publication and mention of the grant of the patent: **21.04.2021**
(21) Application number: 16908257.5
(22) Date of filing: 07.12.2016
(51) Int. Cl.: E03B 3/28, C02F 1/00, C02F 9/00

(54) **HIGH-EFFICIENCY AIR WATER SYSTEM FOR TROPICAL CLIMATE**
HOCHEFFIZIENTES LUFT-WASSER-SYSTEM FÜR TROPISCHES KLIMA
SYSTÈME D'EXTRACTION D'EAU D'AIR À HAUT RENDEMENT POUR CLIMAT TROPICAL

(30) Priority: 08.07.2016 KR 20160086648
(43) Date of publication of application: 15.05.2019
(73) Proprietor: Air Water Korea Co., Ltd., Gwangju 61011 (KR)
(72) Inventor: NAM, Jae Il, Seo-gu Gwangju 61927 (KR)
(74) Representative: Jacobi, Markus Alexander
(86) International application number: PCT/KR2016/014315
(87) International publication number: WO 2018/008815

(56) References cited:
- CN-A- 105 271 554
- ES-U- 1 067 560
- JP-A- H08 240 324
- KR-A- 20050 027 843
- KR-A- 20100 012 164
- KR-A- 20130 022 386
- KR-B1- 100 712 194
- NL-C1- 1 030 069

## Description

### TECHNICAL FIELD

The present invention relates to a high-efficiency air water system for a tropical climate and more specifically, to a high-efficiency air water system for a tropical climate, which is provided with an evaporator in an accommodation space of a main body thereof, a condenser installed in a perforated portion formed at a side wall of the main body such that air cooled in the main body is used to dissipate heat generated in the condenser thereby making it possible to improve dehumidification efficiency, and a filtration system for filtering substances introduced into a the main body of a water generating unit.

### DESCRIPTION OF THE RELATED ART

Water pollution is getting worse due to industrial advances and an increase in pollutants. Against these circumstances, a device for purifying water such as a water purifier is used to purify water, or bottled water in the market is bought for use.

In general, a water purifier is supplied with raw water of the river, the sea etc. and purifies the raw water by filtering harmful substances from the raw water through the process of precipitation, filtering, sterilization etc. using a plurality of filters such that a user can drink the purified water. However, in areas where there is not enough raw water to be purified, a usual water purifier is useless.

According to a theory, relative humidity is lowered when air temperature goes down, and at a temperature where relative humidity is 100 % (dew point), an amount of water vapor that exceeds a saturation water vapor amount is condensed and turned into water. On the basis of the theory, a device for purifying, into drinkable water, raw water, obtained through a method in which a refrigerant is circulated so as to cool air, and water vapor in the air is condensed so as to obtain raw water, has been developed.

As a related art, South Korean Patent Laid-Open Publication No. 2005-0027843 and South Korean Patent Laid-Open Publication No. 2010-0104336 disclose a method of condensing moisture in the air through a compressor that sucks external air and compresses a gaseous refrigerant to high temperature and pressure, a condenser that condenses the high-temperature, high-pressure refrigerant gas discharged from the compressor, and an evaporator that evaporates a low-pressure refrigerant passing an expansion tube by way of the condenser so as to generate a certain amount of raw water, and purifying the raw water, thereby making it possible to provide drinkable water. In the method, air is cooled through the circulation of a refrigerant. Thus, a small amount of raw water is generated while a large amount of energy is consumed

ES-U-1067560 shows an air water system for a tropical climate comprising an air suctioning unit for suctioning and supplying external air, a water generating unit for condensing moisture in the air supplied by the air suctioning unit and generating water, the water generating unit comprising, a main body having an accommodation space therein, an open upper side connecting with the air suctioning unit, and a perforated portion formed at a lateral surface thereof; an evaporator cooling external air suctioned through the air suctioning unit to a temperature equal to or below dew point; a hopper formed at the lower portion of the main body, supporting water generated by the evaporator, and having an outlet on one side thereof so as to discharge water outwards; a water storing part installed at the lower side of the main body, and supplied with water discharged through the outlet and collecting the same; a condenser installed at the perforated portion of the main body, and a compressor connecting with the evaporator and the condenser and compressing a circulating refrigerant, the outlet is provided with a U trap so as to prevent a reduction in the amount of air introduced into the main body while blocking air introduced through an outlet from the outside.

In particular, efficiency in condensation of a condenser has to be improved so as to improve efficiency of an evaporator. However, in tropical areas, external temperature (about 30°C∼40°C) is too high to effectively condense a refrigerant passing a condenser. As a result, an evaporator fails to function properly.

### DETAILED DESCRIPTION OF THE INVENTION

### TECHNICAL PROBLEMS

The present invention is directed to providing an air water system which dissipates heat of a condenser by using air cooled in a main body so as to improve dehumidification efficiency as a technology for evaporating moisture contained in the air and generating water.

### TECHNICAL SOLUTIONS

An air water system of the present invention includes an air suctioning unit 10 for suctioning and supplying external air, a water generating unit 20 for condensing moisture in the air supplied by the air suctioning unit 10 and generating water, and a water purifying unit 30 for filtering and purifying water generated by the water generating unit 20 so as to turn the water into drinkable and usable water, wherein the water generating unit 20 includes a main body 21 having an accommodation space therein, an open upper portion connecting with the air suctioning unit 10, and a perforated portion 21' formed at a lateral surface thereof; an evaporator 25 horizontally installed at the upper side inside the main body 21 and cooling external air suctioned through the air suctioning unit 10 to a temperature equal to or below dew point; a hopper 23 formed at the lower portion of the main body 21, supporting water generated by the evaporator 25, and having an outlet 23` on one side thereof so as to discharge water outwards; a water storing part 24 installed at the lower side of the main body 21, and supplied with water discharged through the outlet 23` and collecting the same; a condenser 26 vertically installed at the perforated portion 21` of the main body 21 and having a fan 26' formed at the outer surface thereof so as to discharge cool air in the main body 21 outwards by way of the condenser 26; and a compressor 27 connecting with the evaporator 25 and the condenser 26 and compressing a circulating refrigerant, wherein inlet and outlet refrigerant tubes of the evaporator 25 are provided with dual pressure switches (25A, 25B) that are turned off so as to obtain water by melting frost on a cooling pin of the evaporator 25 when pressure values measured by the pressure sensor 22 are not within the range of set pressure values, wherein the outlet 23` is provided with a U trap 40 so as to prevent a reduction in the amount of air introduced into the main body 21 while blocking air introduced through an outlet from the outside.

### ADVANTAGEOUS EFFECTS

An air water system according to the present invention has the advantages of evaporating moisture in the air so as to generate water and turning the water as raw water into drinkable water, and improving efficiency in cooling of air and increasing production of raw water by means of an evaporator and a condenser installed in an accommodating space inside a main body.

### BRIEF DESCRIPTION OF THE DRAWINGS

FIG. 1 is a perspective view of an air water system according to the present invention.
FIG. 2 is a perspective view illustrating the inside of an air water system according to the present invention.
FIG. 3 is a view illustrating the state where a main body according to the present invention is cut.
FIG. 4 is a perspective view illustrating a water storing part according to the present invention.
FIG. 5 is a view illustrating a cross section of the upper portion of a water storing part according to the present invention.
FIG. 6 is a view illustrating the state where a blade is installed at the front of a condenser according to the present invention.

### BEST MODE FOR CARRYING OUT THE INVENTION

A high-efficiency air water system for a tropical climate according to a preferred embodiment of the present invention will be described in detail with reference to the attached drawings.

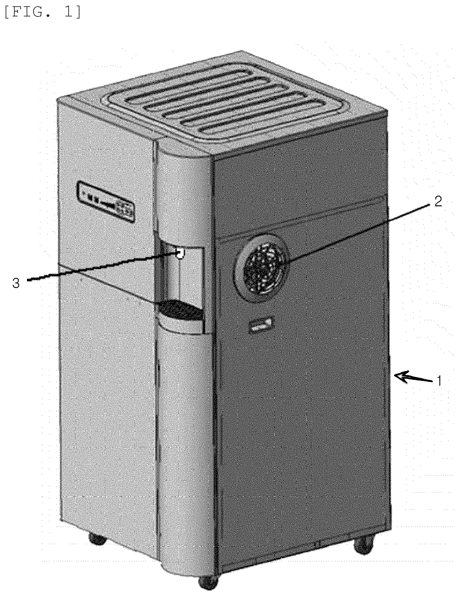

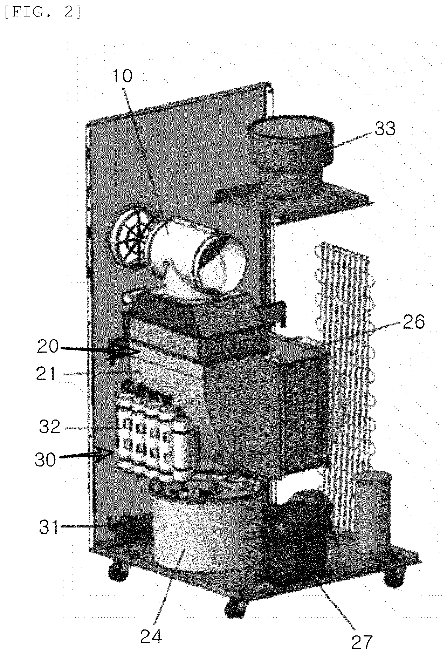

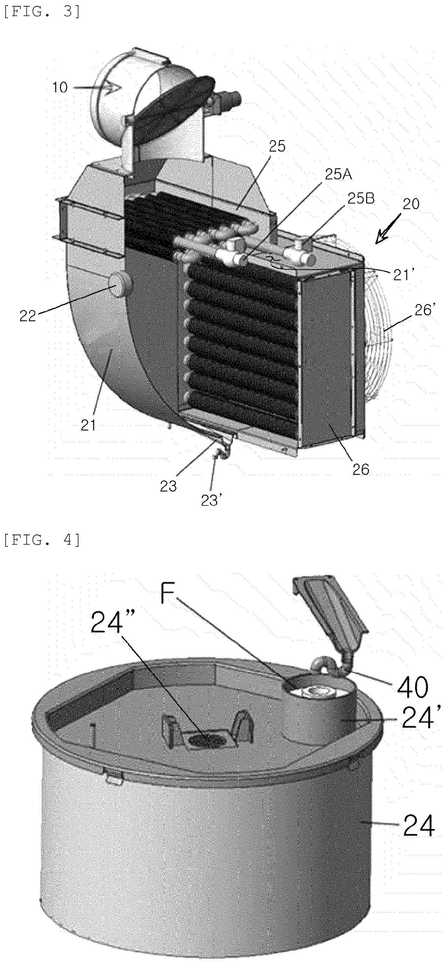

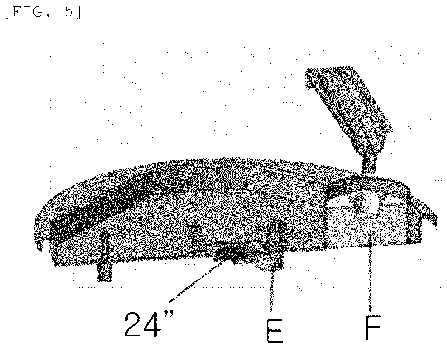

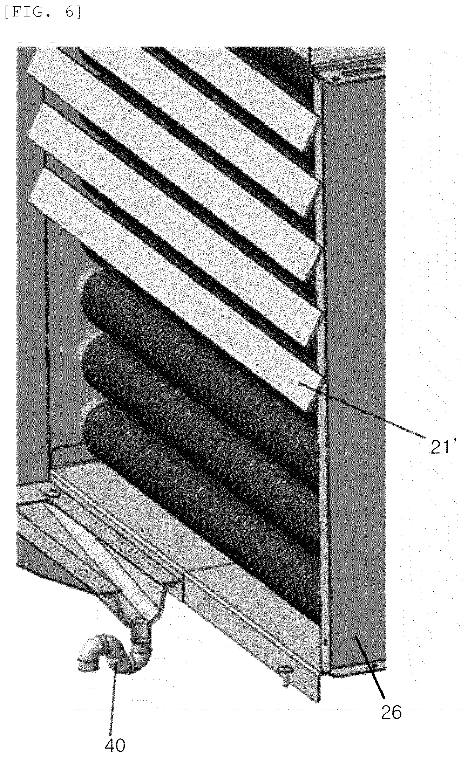

A high-efficiency air water system for a tropical climate according to the present invention, as illustrated in FIGS. 1 to 6, includes an air suctioning unit 10, a water generating unit 20, a water purifying unit 30.

The air suctioning unit 10 allows indoor or outdoor air to be sucked into the water generating unit 20, the air suctioning unit 10, the water generating unit 20, and the water purifying unit 30 are installed inside a case, the case 1 has an air introducing hole 2 that connects with the air suctioning unit 10, and the air introducing hole 2 can connect with a duct (no symbol) so as to selectively input indoor air or outdoor air.

A discharging unit 3 is formed at one side of the case 1 so as to discharge purified water that is drinkable or usable.

In this case, an air filter (invisible) is preferably installed at the air introducing hole 2 so as to remove foreign substances existing in the air sucked into the air introducing hole 2.

The water generating unit 20 is coupled to the lower portion of the air suctioning unit 10 so as to generate water from the air supplied through the air suctioning unit 10 and to use the generated water as raw water, and includes a main body 21, a hopper 23, a water string part 24, an evaporator 25, a condenser 26 and a compressor 27.

Herein, the main body 21 has an accommodation space therein and an open upper side, and the open upper side connects with the air suctioning unit 10 such that air is supplied into the main body while the open upper side is closed.

Specifically, the corners of the main body 21 are preferably formed in a curved elbow shape such that water is smoothly led into a hopper and collected in the water storing part 24 through an outlet while the main body 21 allows external air not to be affected by resistance when the external air passes an evaporator 25 and is discharged by way of a condenser 26.

The hopper 23, supporting water generated in the main body 21 and leading the same to be collected in the water storing part 24, is provided at the lower portion of the main body 21 and has an outlet 23' formed at the lower portion of one side of the main body so as to discharge generated water.

In this case, the outlet 23` preferably has a U trap 40 so as to prevent a reduction in the amount of air introduced into the main body 21 while blocking air introduced through the outlet from the outside.

As a result, the amount of air introduced into the main body is maintained, and water is continuously generated without a reduction in the production of water.

The evaporator 25 is configured to cool air supplied into the main body 21 by the air suctioning unit 10 at temperature equal to or below the dew point, the condenser 26 is configured to convert a high-temperature gaseous refrigerant containing heat taken from the evaporator 25 into a low-temperature chilled liquid refrigerant, and the compressor 27 is configured to connect with the evaporator 25 and the condenser 26 and compress a circulating gaseous refrigerant to high temperature and pressure. The well-known freezing cycle is applied to the evaporator, condenser, and compressor.

In this case, the evaporator 25 of the present invention is parallelly installed on the upper side of the main body 21, and the condenser 26 is vertically installed at a perforated portion 21' formed on the lateral surface of the main body 21 and is configured to discharge cold air inside the main body 21 outwards by way of the condenser 26 by means of a fan 26' installed at the condenser 26.

By doing so, the cold air inside the main body 21 cools the condenser 26 so as to improve efficiency in heat dissipation of the condenser thereby improving efficiency in evaporation of the evaporator.

In tropical regions, external air is too hot to smoothly cool a condenser. Thus, condensation efficiency is low. According to the present invention, cold air inside the main body goes through a condenser so as to allow the condenser to dissipate heat thereby improving efficiency in condensation.

The water storing part 24 has a water introducing part 24' formed at the upper portion thereof so as to introduce water discharged from the outlet 23`, and the water introducing part 24` is provided with a filtration net F so as to filter the introduced water, a water introducing groove 24" formed on the upper surface thereof so as to introduce overflown water if water cannot go through the filtration net and is overflown because foreign substances are accumulated in the filtration net, and a sensor E do as to sense water introduced into the water introducing groove.

Preferably, an alarm etc. is used to notify to a user that the sensor E senses water thereby making the user wash the filtration net.

Meanwhile, inlet and outlet refrigerant tubes of the evaporator 25 of the present invention are provided with dual pressure switches (25A, 25B) so as to obtain water by stopping the freezing cycle and melting frost on a cooling pin of the evaporator 25.

The dual pressure switches operate regularly at a set time, or operate according to pressure values if a pressure sensor that will be described hereunder is installed so as to operate or stop the freezing cycle. When frost is piled on a cooling pin of the evaporator, the dual pressure switches stop the freezing cycle so as to melt the frost and to generate water, and when the frost is melted, the dual pressure switches operate the freezing cycle so as to accumulate frost on the cooling pin of the evaporator.

South Korean Patent Laid-Open Publication No. 1998-0009616 discloses such dual pressure switches. Thus, the detailed structure of the dual pressure switches will not be described.

The water purifying unit 30 is installed on one side of the water storing part 24 in which water generated by the water generating unit 20 is collected, and is configured to filter and purify water supplied by a supply pump 31 with a plurality of filters 32 so as to convert the water into drinkable and usable water. Purified water that has passed the filters 32 is stored in a water tank 33 such that a user drinks or uses the water stored in the water tank by discharging the same.

In this case, although it is not illustrated, the water stored in the water tank 33 can be discharged in the state of being heated or cooled depending on a user's needs.

Meanwhile, a discharging unit that discharges warm air according to the operation of the freezing cycle is formed on the rear surface of the case 1 of the present invention.

An operation of an air water system with the above-described configuration according to the first embodiment of the present invention will be described.

Sucked air is introduced into a main body 21 according to the operation of an air suctioning unit 10. Air sucked into the main body 21 passes an evaporator, and moisture in the air is removed such that water is generated.

Specifically, air supplied into a main body 21 passes an evaporator 25, heat is taken from the air, and the air is cooled. By doing so, the inside of the main body 21 is cooled at temperature equal to or below the dew point, and moisture in the air introduced into the main body 21 is turned into a solid and attached to a cooling pin of the evaporator.

As described above, when frost is accumulated on the cooling pin of the evaporator, the operation of the freezing cycle stops, and the frost attached to the cooling pin is melted and defrosted such that water is generated.

In order to stop the operation of the freezing cycle, a timer (invisible) or a temperature sensor etc. is regularly turned on and off. By doing so, moisture in the air is turned into a solid like frost while passing the evaporator 25, and then melted and turned into a liquid such that water is generated.

In this case, power regularly supplied to the evaporator is supplied or blocked such that water can be generated. Thus, the evaporator doesn't have to operate continuously. This leads to a reduction in costs of cooling air and an increase in the life span of the freezing cycle.

The generated water passes a hopper 23 and is collected in a water storing part 24 through an outlet 23'. The water collected in the water storing part 24 is pumped by a supply pump 31, passes a plurality of filters 32 so as to be filtered and purified, and then is stored in a water tank 33. The water stored in the water tank is supplied through a discharge cock to a user in the state of being heated or cooled.

Herein, a perforated portion 21' has a plurality of blades 21" so as to prevent water falling from the cooling pin of the evaporator 25 from being introduced into a condenser 26.

Meanwhile, a pressure sensor 22 can be installed on one side wall of the main body 21.

The pressure sensor 22 is configured to measure pressure inside the main body 21, and the operation of the freezing cycle stops only when frost is accumulated relatively high through measurement of pressure inside the main body using the pressure sensor not through a regular stop of the operation of the freezing cycle using the timer.

That is, if frost is continuously accumulated on the cooling pin, the frost blocks the inlet. Thus, external air is not introduced into the main body 21, pressure inside the main body increases. In this case, the pressure sensor measures the increased pressure.

When the measured pressure values exceed set pressure values, the pressure sensor blocks power supplied to the freezing cycle so as to stop the freezing cycle, melts and removes frost in a solid state while operating the fan, thereby making it possible to generate water.

## Claims

1. A high-efficiency air water system for a tropical climate comprising: an air suctioning unit (10) for suctioning and supplying external air, a water generating unit (20) for condensing moisture in the air supplied by the air suctioning unit (10) and generating water, and a water purifying unit (30) for filtering and purifying water generated by the water generating unit (20) so as to turn the water into drinkable and usable water,
the water generating unit (20) comprising:
a main body (21) having an accommodation space therein, an open upper side connecting with the air suctioning unit (10), and a perforated portion (21') formed at a lateral surface thereof;
an evaporator (25) horizontally installed at the upper side inside the main body (21) and cooling external air suctioned through the air suctioning unit (10) to a temperature equal to or below dew point;
a hopper (23) formed at the lower portion of the main body (21), supporting water generated by the evaporator (25), and having an outlet (23`) on one side thereof so as to discharge water outwards;
a water storing part (24) installed at the lower side of the main body (21), and supplied with water discharged through the outlet (23`) and collecting the same;
a condenser (26) vertically installed at the perforated portion (21') of the main body (21) and having a fan (26') formed at the outer surface thereof so as to discharge cool air in the main body (21) outwards; and
a compressor (27) connecting with the evaporator (25) and the condenser (26) and compressing a circulating refrigerant,
wherein inlet and outlet refrigerant tubes of the evaporator (25) are provided with dual pressure switches (25A, 25B) that are turned off so as to obtain water by melting frost on a cooling pin of the evaporator (25) when pressure values measured by a pressure sensor (22) are not within a range of set pressure values,
the outlet (23') is provided with a U trap (40) so as to prevent a reduction in the amount of air introduced into the main body (21) while blocking air introduced through an outlet from the outside.

2. The high-efficiency air water system for a tropical climate according to claim 1,
Wherein the perforated portion (21') is provided with a plurality of blades (21") so as to prevent water, which falls while frost on the cooling pin of the evaporator (25) is melted, from being introduced into the condenser (26).

3. The high-efficiency air water system for a tropical climate according to claim 1,
wherein the main body (21) is provided with a pressure sensor (22) installed on one side wall thereof so as to measure inner pressure and to control the operation of a freezing cycle.

## Patentansprüche

1. Hocheffizientes Luft-Wasser-System für tropisches Klima, umfassend: eine Luftansaugeinheit (10) zum Ansaugen und Zuführen von Außenluft, eine Wassererzeugungseinheit (20), zum Kondensieren von Feuchtigkeit in der von der Luftansaugeinheit (10) zugeführten Luft und zum Erzeugen von Wasser, und eine Wasserreinigungseinheit (30) zum Filtern und Reinigen des von der Wassererzeugungseinheit (20) erzeugten Wassers, um das Wasser in trinkbares und nutzbares Wasser umzuwandeln,
wobei die Wassererzeugungseinheit (20) umfasst:
einen Hauptkörper (21) mit einem Aufnahmeraum darin, einer offenen Oberseite, die mit der Luftansaugeinheit (10) verbunden ist, und einem perforierten Abschnitt (21'), der an seiner Seitenfläche ausgebildet ist;
einen Verdampfer (25), der horizontal an der Oberseite innerhalb des Hauptkörpers (21) angebracht ist und durch die Luftansaugeinheit (10) angesaugte Außenluft auf eine Temperatur gleich oder unterhalb des Taupunktes kühlt;
einen Fördertrog (23), der an dem unteren Abschnitt des Hauptkörpers (21) ausgebildet ist, der von dem Verdampfer (25) erzeugtes Wasser zuführt und einen Auslass (23') an seiner Seite aufweist, um Wasser nach außen abzuführen;
einen Wasserspeicherteil (24), der an der Unterseite des Hauptkörpers (21) angebracht ist und dem durch den Auslass (23') abgeführtes Wasser zugeführt wird und der dieses sammelt;
einen Kondensator (26), der vertikal an dem perforierten Abschnitt (21') des Hauptkörpers (21) angebracht ist und einen an seiner Außenfläche ausgebildeten Ventilator (26') aufweist, um kühle Luft in dem Hauptkörper (21) nach außen abzuführen; und
einen Kompressor (27), der mit dem Verdampfer (25) und dem Kondensator (26) verbunden ist und ein zirkulierendes Kältemittel komprimiert,
wobei Einlass- und Auslasskältemittelrohre des Verdampfers (25) mit Doppeldruckschaltern (25A, 25B) ausgerüstet sind, die abgeschaltet werden, um Wasser durch Schmelzen von Reif auf einem Kühlstift des Verdampfers (25) zu erhalten, wenn von einem Drucksensor (22) gemessene Druckwerte nicht innerhalb eines Bereichs von Solldruckwerten liegen,
der Auslass (23') mit einer U-Falle (40) ausgerüstet ist, um eine Verringerung der in den Hauptkörper (21) eingeleiteten Luftmenge zu verhindern, während die durch einen Auslass von außen eingeleitete Luft blockiert wird.

2. Hocheffizientes Luft-Wasser-System für tropisches Klima nach Anspruch 1,
wobei der perforierte Abschnitt (21') mit einer Vielzahl von Lamellen (21") ausgerüstet ist, um zu verhindern, dass Wasser, das fällt während Reif auf dem Kühlstift des Verdampfers (25) geschmolzen wird, in den Kondensator (26) eingeleitet wird.

3. Hocheffizientes Luft-Wasser-System für tropisches Klima nach Anspruch 1, wobei der Hauptkörper (21) mit einem Drucksensor (22) ausgerüstet ist, der an seiner Seitenwand angebracht ist, um den Innendruck zu messen und den Betrieb eines Gefrierzyklus zu steuern.

## Revendications

1. Système air-eau à haute efficacité pour un climat tropical comprenant :
une unité d'aspiration d'air (10) pour aspirer et fournir de l'air externe, une unité de production d'eau (20) pour condenser l'humidité dans l'air fourni par l'unité d'aspiration d'air (10) et produire de l'eau, et une unité de purification d'eau (30) pour filtrer et purifier l'eau produite par l'unité de production d'eau (20) de manière à transformer l'eau en eau potable et utilisable,
l'unité de production d'eau (20) comprenant :
un corps principal (21) renfermant un espace d'accueil, un côté supérieur ouvert se raccordant à l'unité d'aspiration d'air (10), et une partie perforée (21') formée à une surface latérale de celui-ci ;
un évaporateur (25) installé horizontalement sur le côté supérieur à l'intérieur du corps principal (21) et refroidissant l'air externe aspiré par l'unité d'aspiration d'air (10) jusqu'à une température égale ou inférieure au point de rosée ;
une trémie (23) formée au niveau de la partie inférieure du corps principal (21), supportant l'eau produite par l'évaporateur (25), et ayant une sortie (23') sur un côté de celle-ci de manière à évacuer l'eau à l'extérieur;
une pièce de stockage d'eau (24) installée sur le côté inférieur du corps principal (21), et alimentée avec l'eau évacuée par la sortie (23') et collectant celle-ci ;
un condenseur (26) installé verticalement au niveau de la partie perforée (21') du corps principal (21) et ayant un ventilateur (26') formé à la surface extérieure de celui-ci de manière à évacuer l'air froid dans le corps principal (21) à l'extérieur; et
un compresseur (27) se raccordant à l'évaporateur (25) et au condenseur (26) et comprimant un fluide frigorigène en circulation,
dans lequel des tubes d'entrée et de sortie de fluide frigorigène de l'évaporateur (25) sont pourvus de manocontacts doubles (25A, 25B) qui sont fermés de manière à obtenir de l'eau en faisant fondre du givre sur une broche de refroidissement de l'évaporateur (25) quand des valeurs de pression mesurées par un capteur de pression (22) ne se situent pas dans la gamme de valeurs de pression de consigne,
la sortie (23') est pourvue d'un piège en U (40) de manière à empêcher une réduction de la quantité d'air introduite dans le corps principal (21) tout en bloquant l'air introduit par une sortie depuis l'extérieur.

2. Système air-eau à haute efficacité pour un climat tropical selon la revendication 1,
dans lequel la partie perforée (21') est pourvue d'une pluralité de lames (21") de manière à empêcher l'eau qui tombe pendant que le givre sur la broche de refroidissement de l'évaporateur (25) est fondu de s'introduire dans le condenseur (26).

3. Système air-eau à haute efficacité pour un climat tropical selon la revendication 1,
dans lequel le corps principal (21) est pourvu d'un capteur de pression (22) installé sur une paroi latérale de celui-ci de manière à mesurer une pression interne et à contrôler le fonctionnement d'un cycle de congélation.
